# EUROPÄISCHE PATENTSCHRIFT

(11) **EP 1 130 024 B1**
(45) Veröffentlichungstag und Bekanntmachung des Hinweises auf die Patenterteilung: **12.02.2003**
(21) Anmeldenummer: 01104628.1
(22) Anmeldetag: 23.02.2001
(51) Int. Cl.: C07F 9/54

(54) **Verfahren zur Herstellung von Phosphoniumsalzen**
Process for the preparation of phosphonium salts
Procédé pour la préparation de sels de phosphonium

(30) Priorität: 02.03.2000 DE 10009459
(43) Veröffentlichungstag der Anmeldung: 05.09.2001
(73) Patentinhaber: BASF AKTIENGESELLSCHAFT, 67056 Ludwigshafen (DE)
(72) Erfinder: Wegner, Christoph, Dr., 67281 Kirchheim (DE); John, Michael, Dr., 67245 Lambsheim (DE)

(56) Entgegenhaltungen:
- EP-A- 0 382 067
- EP-A- 0 895 997

## Beschreibung

Die vorliegende Erfindung betrifft ein Verfahren zur Herstellung von 3,7,11-Trimethyldodeca-2,4,6,10-tetraen-1-yl-phosphoniumsalzen.

In der Regel werden die C₁₅-Phosphoniumsalze zur Synthese von Carotinoiden aus Vinylcarbinolen durch Reaktion mit Triphenylphosphan und einer starken Säure wie HCl oder H₂SO₄ in protischen Lösungsmitteln hergestellt (siehe z.B. J. Chem. Soc., 1965, 2019-2026). Anders als Vinyl-β-Ionol, ein für die Synthese von Vitamin A und β-Carotin eingesetztes Edukt, läßt sich Vinylpseudoionol als Edukt zur Herstellung von Lycopin unter diesen Standardkonditionen nur mit schlechten Ausbeuten und mit niedrigen E/Z-Selektivitäten zu den entsprechenden C₁₅-Phosphoniumsalzen umsetzen.

In der EP-A-0 382 067 ist ein Verfahren beschrieben, nach dem C₁₅-Phosphoniumsalze niederer Alkansäuren als Zwischenprodukte hergestellt werden, da die genannten Salze starker Säuren grundsätzlich schlechte E/Z-Selektivitäten und bei der folgenden Herstellung von Lycopin geringe Ausbeuten (Nebenprodukte) ergeben. Die Salze der Alkansäuren müssen vor der abschließenden Wittig-Olefinierung in einer aufwendigen Prozedur mittels Anionenaustausch wieder in die Chloride überführt werden. Zur Erzielung eines hohen E/Z-Verhältnisses im Lycopin ist zusätzlich eine Abtrennung von (Z)-Anteilen des Phosphoniumsalzes durch Kristallisation erforderlich.

Die DE-A-27 29 974 offenbart ein Verfahren zur Herstellung wässriger Lösungen von Polyenyltriarylphosphoniumsalzen von starken Säuren in Essigsäure (siehe Beispiel 3), allerdings werden in den Beispielen keine 3,7,11-Trimethyldodeca-2,4,6,10-tetraen-1-yl-phosphoniumsalze genannt.

EP-A-0 895 997 beschreibt ein Verfahren zur Herstellung von C₁₅-Phosphoniumsalzen durch Umsetzung von 3,7,11-Trimethyldodeca-1,4,6,10-tetraen-3-ol mit Triarylphosphin und Sulfonsäuren in einem Lösungsmittel. Die mit diesem Verfahren erzielten E/Z-Selektivitäten der C₁₅-Phosphoniumsalze sind jedoch noch nicht zufriedenstellend.

Es bestand daher die Aufgabe, ein Verfahren zur Herstellung von C₁₅-Phosphoniumsalzen zur Verfügung zu stellen, bei dem 3,7,11-Trimethyldodeca-2,4,6,10-tetraen-1-yl-phosphoniumsalze mit hohem E-Anteil erhalten werden, die beispielsweise bei der Weiterreaktion zu Lycopin hohe E/Z-Selektivitäten ergeben.

Diese Aufgabe wurde erfindungsgemäß gelöst mit einem Verfahren zur Herstellung von Phosphoniumsalzen der allgemeinen Formel I, 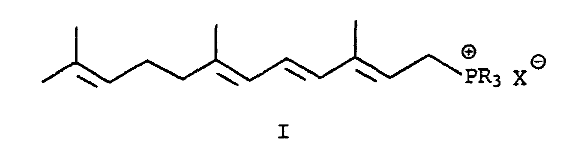 in der die Substituenten unabhängig voneinander folgende Bedeutung haben:
- R: Aryl;
- X: Anion einer organischen oder anorganischen Säure, ausgewählt aus der Gruppe, bestehend aus Halogenwasserstoffsäuren, Schwefelsäure, Sulfonsäuren, Phosphorsäure und C₁-C₆-Alkansäuren,
durch Umsetzung von 3,7,11-Trimethyldodeca-1,4,6,10-tetraen-3-ol der Formel II 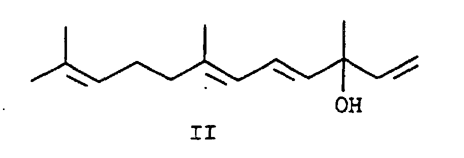 mit Triarylphosphan und organischen oder anorganischen Säuren, ausgewählt aus der Gruppe, bestehend aus Halogenwasserstoffsäuren, Schwefelsäure, Sulfonsäuren, Phosphorsäure und C₁-C₆-Alkansäuren,
dadurch gekennzeichnet, daß man in einem zweistufigen Prozeß
a) zunächst ein tertiäres Phosphoniumsalz der Formel III, 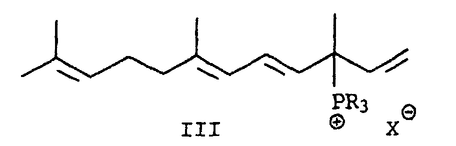 in der die Reste R und X die oben genannte Bedeutung haben, bei Temperaturen im Bereich von -20 bis 40°C, bevorzugt im Bereich von -10 bis 20°C, besonders bevorzugt im Bereich von 0 bis 15°C herstellt, und
b) das gebildete tertiäre Phosphoniumsalz der Formel III bei Temperaturen im Bereich von 40 bis 100°C, bevorzugt im Bereich von 40 bis 70°C, besonders bevorzugt im Bereich von 40 bis 60°C zum primären Phosphoniumsalz der Formel I umlagert.

Der Alkohol der allgemeinen Formel II (3,7,11-Trimethyldodeca-1,4,6,10-tetraen-3-ol) wird auch als Vinyl-Ψ-ionol oder Vinylpseudoionol bezeichnet und ist z.B. aus J. Chem. Soc. 1965, 2023 oder der EP 382 067 bekannt. Er kann nach bekannten Methoden aus Pseudoionon erhalten werden.

Der in den Formeln I und III für R stehende Begriff Aryl bezeichnet übliche, in Phosphinen und Phosphoniumsalzen vorkommende Arylreste, wie Phenyl, Toluyl, Naphthyl, gegebenenfalls substituiert, bevorzugt Phenyl.

Unter Halogenwasserstoffsäuren für X sind insbesondere Salzsäure und Bromwasserstoffsäure zu verstehen.

Der Begriff Sulfonsäuren bezeichnet Aryl- und Alkylsulfonsäuren, ausgewählt aus der Gruppe, bestehend aus CₙH₂ₙ₊₁-SO₃H mit n = 1 bis 4, Ar-SO₃H mit Ar = Phenyl, Toluyl und CF₃-SO₃H. Bevorzugte Sulfonsäuren sind Methansulfonsäure, Ethansulfonsäure und p-Toluolsulfonsäure.

Der Ausdruck C₁-C₆-Alkansäuren bezeichnet geradkettige oder verzweigte Carbonsäuren mit 1 bis 6 Kohlenstoffatomen wie z.B. Ameisensäure, Essigsäure, Propionsäure, Buttersäure, Isobuttersäure, Valeriansäure und Isovaleriansäure. Bevorzugte Carbonsäuren sind Ameisensäure, Essigsäure und Propionsäure.

Eine besondere Ausführungsform des erfindungsgemäßen Verfahrens ist dadurch gekennzeichnet, daß man die Umsetzung im Verfahrensschritt a) mit Sulfonsäuren, bevorzugt mit Sulfonsäuren, ausgewählt aus der Gruppe, bestehend aus CₙH₂ₙ₊₁-SO₃H mit n = 1 bis 4, Ar-SO₃H mit Ar = Phenyl, Toluyl oder CF₃-SO₃H, besonders bevorzugt mit Methansulfonsäure oder Ethansulfonsäure in Gegenwart von C₁-C₆-Alkansäuren, bevorzugt Essigsäure oder Propionsäure, besonders bevorzugt in Gegenwart von Essigsäure als Lösungsmittel durchführt.

Dabei wird in der Regel die Sulfonsäure im Lösungsmittel vorgelegt und der Alkohol zugegeben.

Um hohe E/Z-Selektivitäten zu erzielen ist es bei dieser Vorgehensweise besonders vorteilhaft, wenn mit Essigsäure als Lösungsmittel und mit äquimolaren Mengen der o.g. Sulfonsäuren gearbeitet wird.

Dem Reaktionsgemisch kann gegebenenfalls noch ein inertes organisches Lösungsmittel zugesetzt werden. Bevorzugte inerte organische Lösungsmittel sind u.a. chlorierte oder aromatische Kohlenwasserstoffe, Ether, Alkohole und Ester, z.B. Hexan, Methylenchlorid, Chloroform, Benzol, Toluol, Xylol, Diisopropylether, tert.-Butylmethylether, Tetrahydrofuran, Methanol, Ethanol und Ethylacetat.

Der Primärschritt a) - Synthese des tert. Phosphoniumsalzes - erfolgt je nach Reaktionstemperatur innerhalb von 2 bis 120 Minuten, bevorzugt innerhalb von 10 bis 90 Minuten, besonders bevorzugt innerhalb von 15 bis 60 Minuten.

Die Umlagerung vom tertiären zum primären Phosphoniumsalz im Schritt b) erfolgt je nach Temperatur innerhalb von 5 bis 35 Stunden, bevorzugt 10 bis 30 Stunden, besonders bevorzugt 15 bis 25 Stunden.

Mit dem erfindungsgemäßen Verfahren läßt sich Vinylpseudoionol der Formel II mit z.B. Methansulfonsäure in Eisessig in Ausbeuten von 95 % und mit einer E/Z-Selektivität von größer 4:1 zum entsprechenden Phosphoniumsalz umsetzen. Z bedeutet hier die Summe aller vorkommenden Z-Isomere: (2Z,6E)+(2E,6Z)+(2Z,6Z).

Das so erhaltene Salz eignet sich direkt für die Wittig-Reaktion mit 2,7-Dimethyl-2,4,6-octatriendial zur Herstellung von Lycopin, wobei auf zusätzliche Schritte wie Umsalzung oder Anreicherung der E-Komponente durch eine zusätzliche Kristallisation verzichtet werden kann.

Der Vorteil der neuen erfindungsgemäßen Herstellvariante über das tertiäre 3-Phosphoniumsalz liegt u.a. in der Erzielung signifikant höherer E/Z-Verhältnisse. Während man bei einer Reaktion im Temperaturbereich von 60 bis 80°C - gemäß EP-A-0 895 997 - im System Essigsäure/Methansulfonsäure/Triphenylphosphan eine E/Z-Selektivität von 3,6 bis 3,7:1 erzielt, werden nach der neuen Methode E/Z-Selektivitäten von größer 4:1, bevorzugt 4 bis 5:1, besonders bevorzugt 4,1 bis 4,4:1 erreicht.

Ein weiterer Vorteil des erfindungsgemäßen Verfahrens sind deutlich höhere Ausbeuten, die um 5 bis 10% höher liegen als bei den vergleichbaren einstufigen Verfahrensvarianten, die bei höherer Temperatur durchgeführt wurden. Damit verbunden ist auch eine deutlich geringere Bildung von Nebenprodukten (insbesondere die Bildung von Hydroxy- und Acetoxy-Additionsprodukten).

Diese Additionsprodukte reagieren ebenso wie das gewünschte Wertprodukt (3,7,11-Trimethyldodeca-2,4,6,10-tetraen-1-yl-phosphoniumsalz der Formel I) in der bereits eingangs genannten Wittig-Reaktion zu den entsprechenden Lycopin-Analoga und können nur schwer vom Endprodukt Lycopin abgetrennt werden.

Anhand der folgenden Beispiele soll das erfindungsgemäße Verfahren näher erläutert werden.

### Beispiel 1

In einem 1L-Reaktor wurde eine Mischung aus Triphenylphosphan (58 g, 217 mmol), Essigsäure (280 g) und Methansulfonsäure (16,3 g, 170 mmol) bei 10°C vorgelegt. Unter Rühren wurde innerhalb von einer Stunde Vinylpseudoionol (37,4 g, 170 mmol) zugetropft. Nach 30 min Rühren bei 10°C wurde die Reaktionsmischung per HPLC analysiert. Vinylpseudoionol hatte sich zu 95% zum 3-Phosphoniumsalz und zu 5% zum 1-Phosphoniumsalz umgesetzt. Anschließend wurde das Reaktionsgemisch für 20 h auf 45°C erwärmt. Nach HPLC hatte sich das 3-Phosphoniumsalz vollständig in das 1-Phosphoniumsalz umgelagert. Das E/Z-Verhältnis in der Essigsäure-Lösung betrug 4,2:1. Die HPLC-Analyse ergab eine Ausbeute von 95%.

### Beispiel 2

In einem 1 L-Reaktor wurde eine Mischung aus Triphenylphosphan (58 g, 217 mmol), Essigsäure (280 g) und p-Toluolsulfonsäure Hydrat (32,3 g, 170 mmol) bei 10°C vorgelegt. Unter Rühren wurde innerhalb von einer Stunde Vinylpseudoionol (37,4 g, 170 mmol) zugetropft. Nach 30 min Rühren wurde für 20 h auf 45°C erwärmt.

Die HPLC-Analyse ergab folgende Ergebnisse: E/Z-Verhältnis in der Essigsäure-Lösung: 4,3:1; Ausbeute: 95%.

### Beispiel 3

In einem 1 L-Reaktor wurde eine Mischung aus Triphenylphosphan (58 g, 217 mmol), Essigsäure (280 g) und Phosphorsäure, 85% (19,6 g, 170 mmol) bei 10°C vorgelegt. Unter Rühren wurde innerhalb von einer Stunde Vinylpseudoionol (37,4 g, 170 mmol) zugetropft. Nach 30 min Rühren wurde für 20 h auf 45°C erwärmt.

Die HPLC-Analyse ergab folgende Ergebnisse: E/Z-Verhältnis in der Essigsäure-Lösung: 4,2:1; Ausbeute: 95%.

### Beispiel 4

In einem 1 L-Reaktor wurde eine Mischung aus Triphenylphosphan (58 g, 217 mmol), Essigsäure (280 g) und Schwefelsäure (16,7 g, 170 mmol) bei 10°C vorgelegt. Unter Rühren wurde innerhalb von einer Stunde Vinylpseudoionol (37,4 g, 170 mmol) zugetropft. Nach 30 min Rühren wurde für 20 h auf 45°C erwärmt.

Die HPLC-Analyse ergab folgende Ergebnisse: E/Z-Verhältnis in der Essigsäure-Lösung: 4,1:1; Ausbeute: 95%.

### Beispiel 5

In einem lL-Reaktor wurde eine Mischung aus Triphenylphosphan (58 g, 217 mmol), Essigsäure (280 g) und Methansulfonsäure (16,3 g, 170 mmol) bei 70°C vorgelegt. Unter Rühren wurde innerhalb von 10 min Vinylpseudoionol (37,4 g, 170 mmol) zugetropft. Nach weiteren 30 min Rühren bei 70°C wurde die Reaktionsmischung per HPLC analysiert. Das E/Z-Verhältnis in der Essigsäure-Lösung betrug 3,7:1. Quantitative HPLC ergab eine Ausbeute: 91%.

## Patentansprüche

1. Verfahren zur Herstellung von Phosphoniumsalzen der allgemeinen Formel I, 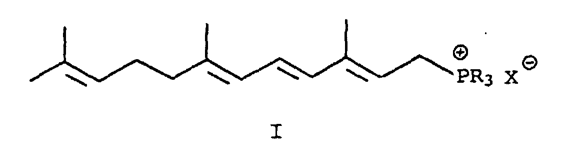 in der die Substituenten unabhängig voneinander folgende Bedeutung haben:
R Aryl;
X Anion einer organischen oder anorganischen Säure, ausgewählt aus der Gruppe, bestehend aus Halogenwasserstoffsäuren, Schwefelsäure, Sulfonsäuren, Phosphorsäure und C₁-C₆-Alkansäuren,
durch Umsetzung von 3,7,11-Trimethyldodeca-1,4,6,10-tetraen-3-ol der Formel II 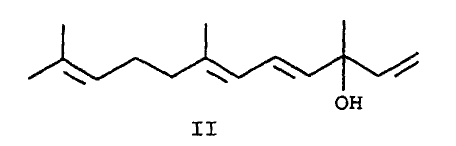 mit Triarylphosphan und organischen oder anorganischen Säuren, ausgewählt aus der Gruppe, bestehend aus Halogenwasserstoffsäuren, Schwefelsäure, Sulfonsäuren, Phosphorsäure und C₁-C₆-Alkansäuren,
**dadurch gekennzeichnet, daß** man in einem zweistufigen Prozeß
a) zunächst ein tertiäres Phosphoniumsalz der Formel III, 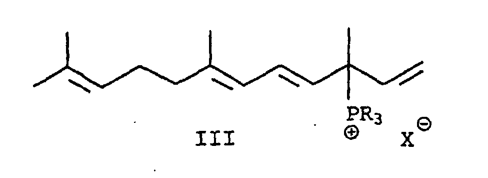 in der die Reste R und X die oben genannte Bedeutung haben, bei Temperaturen im Bereich von -20 bis 40°C herstellt, und
b) das gebildete tertiäre Phosphoniumsalz der Formel III bei Temperaturen im Bereich von 40 bis 100°C zum primären Phosphoniumsalz der Formel I umlagert.

2. Verfahren nach Anspruch 1, **dadurch gekennzeichnet, daß** die Herstellung des tertiären Phosphoniumsalzes der Formel III im Verfahrensschritt a) bei Temperaturen im Bereich von 0 bis 15°C erfolgt.

3. Verfahren nach einem der Ansprüche 1 oder 2, **dadurch gekennzeichnet, daß** die Umlagerung des tertiären Phosphoniumsalzes der Formel III im Verfahrensschritt b) bei Temperaturen im Bereich von 40 bis 60°C erfolgt.

4. Verfahren nach einem der Ansprüche 1 bis 3, **dadurch gekennzeichnet, daß** man die Umsetzung im Verfahrensschritt a) mit Sulfonsäuren in Gegenwart von C₁-C₆-Alkansäuren durchführt.

5. Verfahren nach Anspruch 4, **dadurch gekennzeichnet, daß** man die Umsetzung mit Sulfonsäuren, ausgewählt aus der Gruppe, bestehend aus CₙH₂ₙ₊₁-SO₃H mit n = 1 bis 4, Ar-SO₃H mit Ar = Phenyl, Toluyl oder CF₃-SO₃H in Gegenwart von Essigsäure oder Propionsäure durchführt.

6. Verfahren nach einem der Ansprüche 4 oder 5, **dadurch gekennzeichnet, daß** man die Umsetzung mit Methansulfonsäure oder Ethansulfonsäure in Gegenwart von Essigsäure durchführt.

7. Verfahren nach einem der Ansprüche 1 bis 6 zu Herstellung von Phosphoniumsalzen der allgemeinen Formel I mit einer E/Z Selektivität von größer 4:1.

## Claims

1. A process for preparing phosphonium salts of the general formula I 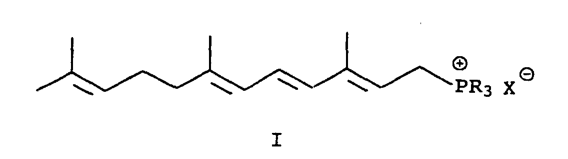 in which the substituents have the following meanings, independently of one another:
R aryl;
X anion of an organic or inorganic acid selected from the group consisting of hydrohalic acids, sulfuric acid, sulfonic acids, phosphoric acid and C₁-C₆-alkanoic acids,
by reacting 3,7,11-trimethyldodeca-1,4,6,10-tetraen-3-ol of the formula II 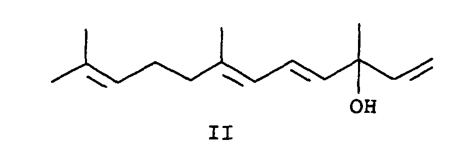 with triarylphosphane and organic or inorganic acids selected from the group consisting of hydrohalic acids, sulfuric acid, sulfonic acids, phosphoric acid and C₁-C₆-alkanoic acids,
wherein in a two-stage process
a) initially a tertiary phosphonium salt of the formula III 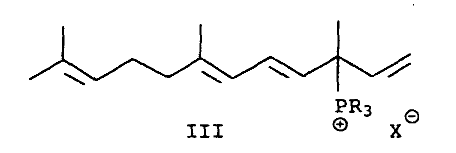 in which the radicals R and X have the abovementioned meanings, is prepared at temperatures in the range from -20 to 40°C, and
b) the tertiary phosphonium salt of the formula III which is formed is rearranged to the primary phosphonium salt of the formula I at temperatures in the range from 40 to 100°C.

2. A process as claimed in claim 1, wherein the tertiary phosphonium salt of the formula III is prepared in process step a) at temperatures in the range from 0 to 15°C.

3. A process as claimed in either of claims 1 or 2, wherein the rearrangement of the tertiary phosphonium salt of the formula III in process step b) is carried out at temperatures in the range from 40 to 60°C.

4. A process as claimed in any of claims 1 to 3, wherein the reaction in process step a) is carried out with sulfonic acids in the presence of C₁-C₆-alkanoic acids.

5. A process as claimed in claim 4, wherein the reaction is carried out with sulfonic acids selected from the group consisting of CₙH₂ₙ₊₁-SO₃H with n = 1 to 4, Ar-SO₃H with Ar = phenyl, tolyl or CF₃-SO₃H in the presence of acetic acid or propionic acid.

6. A process as claimed in either of claims 4 or 5, wherein the reaction is carried out with methanesulfonic acid or ethanesulfonic acid in the presence of acetic acid.

7. A process as claimed in any of claims 1 to 6 for preparing phosphonium salts of the general formula I with an E/Z selectivity of greater than 4:1.

## Revendications

1. Procédé pour la préparation de sels de phosphonium de formule générale I, 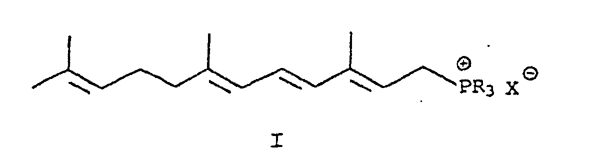 dans laquelle les substituants ont, indépendamment l'un de l'autre, la signification suivante:
R aryle;
X anion d'un acide organique ou inorganique, choisi dans le groupe consistant en acides halogénhydriques, acide sulfurique, acides sulfoniques, acide phosphorique et acides alcanoïques en C₁-C₆,
par réaction de 3,7,11-triméthyldodéca-1,4,6,10-tétraène-3-ol de formule II 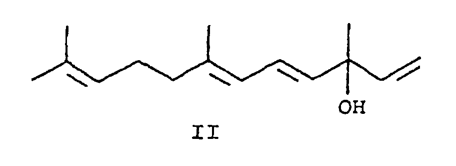 avec du triarylphosphane et des acides organiques ou inorganiques, choisis dans le groupe consistant en acides halogénhydriques, acide sulfurique, acides sulfoniques, acide phosphorique et acides alcanoiques en C₁-C₆,
**caractérisé par le fait que** dans un procédé en deux étapes
a) on prépare d'abord un sel de phosphonium tertiaire de formule III, 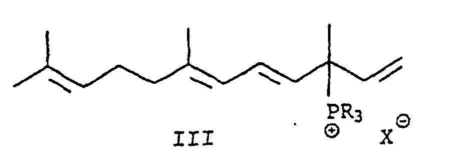 où les restes R et X ont la signification susdite, à des températures dans l'intervalle de -20 à 40°C, et
b) on convertit le sel de phosphonium tertiaire formé de formule III, à des températures dans l'intervalle de 40 à 100°C, en le sel de phosphonium de formule I.

2. Procédé selon la revendication 1, **caractérisé par le fait que** la préparation du sel de phosphonium tertiaire de formule III dans l'étape opératoire a) est effectuée à des températures dans l'intervalle de 0 à 15°C.

3. Procédé selon l'une des revendications 1 ou 2, **caractérisé par le fait que** la conversion du sel de phosphonium tertiaire de formule III dans l'étape opératoire b) est effectuée à des températures dans l'intervalle de 40 à 60°C.

4. Procédé selon l'une des revendications 1 à 3, **caractérisé par le fait qu'**on effectue la réaction dans l'étape opératoire a) avec des acides sulfoniques en présence d'acides alcanoïques en C₁-C₆.

5. Procédé selon la revendication 4, **caractérisé par le fait qu'**on effectue la réaction avec des acides sulfoniques choisis dans le groupe consistant en CₙH₂ₙ₊₁-SO₃H avec n = 1 à 4, Ar-SO₃H avec Ar = phényle, toluyle ou CF₃-SO₃H, en présence d'acide acétique ou d'acide propionique.

6. Procédé selon l'une des revendications 4 ou 5, **caractérisé par le fait qu'**on effectue la réaction avec de l'acide méthanesulfonique ou de l'acide éthanesulfonique en présence d'acide acétique.

7. Procédé selon l'une des revendications 1 à 6 pour la préparation de sels de phosphonium de formule générale I avec une sélectivité E/Z supérieure à 4:1.
